(19) Europäisches Patentamt
European Patent Office
Office européen des brevets

(11) Veröffentlichungsnummer: **0 372 213 B1**

(12) # EUROPÄISCHE PATENTSCHRIFT

(45) Veröffentlichungstag der Patentschrift: **19.05.93**

(51) Int. Cl.[5]: **C08J 7/04**, B32B 27/18, C08L 69/00, C09D 133/12

(21) Anmeldenummer: **89119969.7**

(22) Anmeldetag: **27.10.89**

Die Akte enthält technische Angaben, die nach dem Eingang der Anmeldung eingereicht wurden und die nicht in dieser Patentschrift enthalten sind.

(54) **UV-Absorber-haltige Methacrylatschutzschicht für Polycarbonat.**

(30) Priorität: **05.11.88 DE 3837589**

(43) Veröffentlichungstag der Anmeldung:
**13.06.90 Patentblatt 90/24**

(45) Bekanntmachung des Hinweises auf die Patenterteilung:
**19.05.93 Patentblatt 93/20**

(84) Benannte Vertragsstaaten:
**AT BE CH DE ES FR GB IT LI NL SE**

(56) Entgegenhaltungen:

**CHEMICAL ABSTRACTS, Band 110, Nr. 18, Seite 62, 01 Mai 1989, Columbus, OH (US); Nr. 155753m&NUM;**

(73) Patentinhaber: **Röhm GmbH**
**Kirschenallee Postfach 4242**
**W-6100 Darmstadt 1(DE)**

(72) Erfinder: **Fischer, Jens-Dieter, Dr.**
**Moosbergstrasse 95**
**W-6100 Darmstadt(DE)**
Erfinder: **Munzer, Manfred, Dr.**
**Hunsrückstrasse 15**
**W-6140 Bensheim 1(DE)**
Erfinder: **Golchert, Ursula**
**Soderstrasse 29**
**W-6100 Darmstadt(DE)**
Erfinder: **Schinzel, Felix**
**Buchenlandweg 24**
**W-6100 Darmstadt(DE)**

EP 0 372 213 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gebiet der Erfindung

Die Erfindung betrifft mehrschichtige Kunststoff-Formkörper, die zum überwiegenden Teil aus Bisphenol-A-Polycarbonat bestehen, und die zum Schutz gegen die Wirkung von UV-Strahlung an ihrer Oberfläche mit einer UV-Absorber-haltigen Polymethacrylat-Kunststoffschicht ausgerüstet sind.

Stand der Technik

Polycarbonatkunststoffe haben eine nur begrenzte Wetterfestigkeit. Vor allem durch UV-Strahlung werden sie geschädigt, was sich im Mattwerden ursprünglich glänzender Oberflächen äußert. Das Mattwerden ist das sichtbare Erscheinungsbild des durch die UV-Strahlung bewirkten Makromolekülabbaus, unter Ausbildung einer Vielzahl feinster Haarrisse, beginnend in der Kunststoffoberfläche. In den Kunststoff eingebrachte UV-Absorber vermögen das Innere des Kunststoffkörpers, wie z.B. einer Kunststofftafel aus Polycarbonat, zu schützen, jedoch nicht die Oberfläche. Zu deren Schutz wird nach der deutschen Auslegeschrift 1 694 273 (= US 3 582 398) eine Lackschicht aus Polymethylmethacrylat, die noch einen UV-Absorber enthält, aus einer Lösung dieser Schutzschichtkomponenten aufpräpariert.

Auch die US 4 666 779 beschreibt UV-stabilisierte Artikel aus thermoplastischen Substraten, insbesondere solche aus Polycarbonaten, die mit einer Schutzschicht aus einem Copolymeren, das im wesentlichen aus Methylmethacrylateinheiten und aus 0,5 bis ca. 10 % der Anzahl der Monomereinheiten aus anderen Methacrylateinheiten, nämlich Ethylmethacrylat, n-Butylmethacrylat, i-Butylmethacrylat oder Mischungen derselben und aus 0 bis zu 5 % der Anzahl noch aus anderen $\alpha,\beta$-ungesättigten Monomereinheiten besteht. Die Polymethacrylatschutzschicht wird als Lösung auf das Substrat aufgetragen, wobei die zur UV-Stabilisierung benötigten niedermolekularen UV-Stabilisatoren mit dem Polymer-Lösungsmittel-System eingebracht werden.

Gemäß der DE-A 28 32 676 wird eine Polymethylmethacrylatschicht mit einem genügenden Gehalt an einem UV-Absorber bei der Herstellung einer Polycarbonat-Kunststofftafel durch Koextrusion aufgebracht. Nach der DE-A 32 44 953 (= EP-A 110 238) wird ein verbesserter Verbundkörper dadurch erhalten, daß auf die UV-Absorber-haltige Kunststoffschicht, die Polymethylmethacrylat oder auch Polycarbonat sein kann, noch eine weitere, im wesentlichen wenig UV-Absorber enthaltende, Deckschicht aus Polymethylmethacrylat bzw. (Meth)acrylat-Copolymeren, bei dem Mehrstoffextrusionsvorgang aufgebracht wird.

In allen im Stand der Technik beschriebenen Fällen werden bevorzugt Polymethacrylatkunststoffe, insbesondere Polymethylmethacrylat oder auch Copolymere von Methylmethacrylat und untergeordneten Mengen an $C_2$- bis $C_4$-Alkylmethacrylaten, für die UV-Schutz enthaltende Deckschicht verwendet, weil sie hochwitterungsbeständig sind und ihre Oberflächen weniger als die von Polycarbonaten durch UV-Strahlung geschädigt werden.

Der Nachteil der bekannten, UV-Absorber enthaltenden Polymethacrylat-Deckschichten für Polycarbonatkunststoffe ist, daß sie auf dem abzudeckenden Polycarbonat nur ungenügend haften. Diese Eigenschaft kann dazu führen, daß sich die Deckschicht, zumindest partiell, von dem Polycarbonatkern löst, wodurch dessen UV-Schutz verloren geht. Die Ablösung solcher Deckschichten wird sowohl durch thermische als auch mechanische Beanspruchungen, wie z.B. beim Biegen der mehrschichtigen Kunststoff-Formkörper begünstigt. Der UV-Schutzverlust führt zum molekularen Abbau des Polycarbonat-Kunstsoffkörpers und damit zum Verlust, zumindest zur Verminderung seiner Festigkeitseigenschaften.

Daneben sind noch aus der US 4 576 870 und der EP-A 0 203 487 Kunststoffkörper bekannt, bei denen die UV-absorbierende Schutzschicht ein Copolymerisat von im wesentlichen (Meth)acrylester-Monomeren mit UV-Schutzgruppen-haltigen Monomeren ist. Diese Schutzschichten sind im allgemeinen noch spröder als die oben beschriebenen, niedermolekularen UV-Absorber-haltigen Schutzschichten.

EP-A-283975 beschreibt transparente, thermoplastisch verarbeitbare Polymermischungen aus Bisphenol-A-Polycarbonaten und Copolymerisaten bestehend aus Methylmethacrylat und N-substituierten Maleinimiden. Die Copolymerisate haben jedoch keine UV-Schutzwirkung, auch wenn sie als Deckschichten auf ein Substrat, bestehend aus Bisphenol-A-Polycarbonat, aufgebracht sind.

JP-88 230 338 hat Schutzfilme für verschiedenste Kunststoff-Substrate zum Gegenstand, die gegebenenfalls UV-Absorber enthalten können und die aus zwei Schichten, bestehend aus einer oberflächenschicht aus einem orientierten Methacrylat-Copolymerisat mit 65 bis 100 Gw-% Methylmethacrylat-Einheiten und einer zwischenschicht (zwischen Kunststoff-Substrat und oberflächenschicht) aus einem Acrylat-Methacrylat-Copolymerisat, aufgebaut sind. Das Aufbringen der Schutzfilme, beispielsweise auf

Polycarbonat ist komplex und bedingt eine separate Herstellung eines Polycarbonat-Films, eines Films, der die oberflächenschicht ausmacht und eines Films, der die zwischenschicht ausmacht. In einem zweiten Schritt werden die Filme durch laminieren zusammengefügt.

Aufgabe und Lösung

Ziel der Erfindung war es, mehrschichtige Kunststoff-Formkörper, die zum überwiegenden Teil aus Bisphenol-A-Polycarbonat bestehen, und die mindestens zwischen dem Bisphenol-A-Polycarbonat-Kunststoff und der unmittelbar zu dessen dauerhaftem Schutz aufgebrachten UV-Absorber enthaltenden Polymethacrylatschicht eine dauerhafte Haftung aufweisen, zu schaffen.

Es wurde überraschend gefunden, daß mehrschichtige Kunststoffkörper auf Bisphenol-A-Polycarbonat-Basis mit einer darauf angebrachten, eine dauerhafte Haftung aufweisende und UV-Absorber enthaltende Polymethacrylatschicht, solche sind, deren Polymethacrylatkunststoffschicht aus Methacrylatcopolymeren besteht, die mit Bisphenol-A-Polycarbonat verträgliche Mischungen bilden.

Die Erfindung ist ein mehrschichtiger Kunststoffkörper, mit einer Kernschicht aus mehr als 50 Gew.-% Bisphenol-A-Polycarbonat und einer darauf angebrachten, UV-Absorber enthaltenden, thermoplastischen Polymethacrylatkunststoffschicht und der noch mit weiteren Schichten belegt sein kann, dadurch gekennzeichnet, daß die Polymethacrylatkunststoffschicht aus

(A) 0,01 bis 50 Gew.-% eines UV-Absorbers mit einem Molekulargewicht $M_w \leqq 5000$ und

(B) 99,99 bis 50 Gew.-% eines Methacrylatcopolymerisats, aufgebaut aus

(b1) 99,9 bis 5 Gew.-%, insbesondere 95 bis 20 Gew.-% Methylmethacrylateinheiten und gegebenenfalls weiteren $\alpha,\beta$-ungesättigten Monomereinheiten in Mengen von 0 bis 40 Gew.-% und

(b2.1) aus 0,1 bis 95 Gew.-%, insbesondere 5 bis 80 Gew.-% Methacrylestereinheiten mit carbocyclischen Gruppen im Esterrest der Formel I

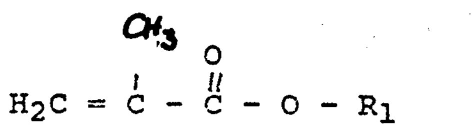

I,

worin

$R_1$: Y oder A-Y sind, wobei Y ein Cycloalkyl- oder ein einfach oder mehrfach alkylsubstituierter Cycloalkylrest mit 5 bis 12 C-Atomen, oder ein gegebenenfalls alkyl- bzw. oxyalkylsubstituierter Arylrest mit 6 bis 12 C-Atomen, und A eine Alkylengruppe, die auch verzweigt sein kann, mit 1 bis 6 C-Atomen oder eine Oxyalkylengruppe mit 2 bis 4 C-Atomen sind und/oder

(b2.2) aus 0,1 bis 95, insbesondere 5 bis 25 Gew.-% monosubstituierten (Meth)acrylamideinheiten aus Monomeren der allgemeinen Formel II

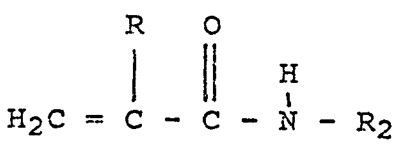

II,

worin

R: H oder $CH_3$ und

$R_2$: ein organischer Rest eines cyclischen gegebenenfalls substituierten Moleküls mit aliphatischer oder aromatischer Struktur mit 5 bis 12 C-Atomen ist,
und/oder

(b2.3) aus 0,1 bis 95, insbesondere 5 bis 40 Gew. – % Maleinimideinheiten der Formel III

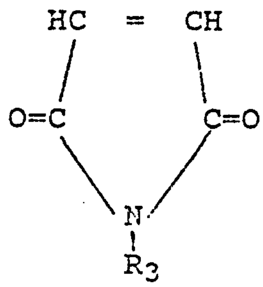

III,

worin

$R_3$: ein gegebenenfalls substituierter Cycloalkylrest, und die Substituenten dann Alkylreste mit 1 bis 6 C – Atomen oder ein Phenylrest sind, ist

besteht, wobei die cyclischen Reste von $R_1$, $R_2$ und $R_3$ kein ausgeprägtes Absorptionsvermögen für sichtbares Licht bis hin zur Ultraviolettstrahlung von 340 nm haben,

das Copolymerisat (B) ein Molekulargewicht $M_w$ zwischen 30.000 und 250000 besitzt, thermoplastisch verarbeitbar ist, und eine Mischung aus Bisphenol – A – Polycarbonat (PC) und Copolymerisat (B) in jedem Verhältnis verträglich ist und eine untere Entmischungstemperatur (LCST) von ≧ 120 Grad C besitzt.

Die erfindungsgemäße, UV – absorbierende und auf dem Bisphenol – A – Polycarbonatkunststoff gut haftende Polymethacrylatschicht kann nach bekannten Methoden, wie Coextrusion und Lackierung, auf den zu schützenden Kunststoff, der zum überwiegenden Teil aus Bisphenol – A – Polycarbonat besteht, aufge – bracht sein. Im Bedarfsfall kann die Polymethacrylatschicht mit einer weiteren Deckschicht z.B. einer watterfesten Polymethylmethacrylatschicht, überzogen sein, wobei diese Schicht bei der Coextrusion gleichzeitig mit den anderen Schichten angelegt oder auch durch nachträgliche Lackierung, wie z.B. auch eine Kratzfestbeschichtung auf der Grundlage von Silikonharzen oder vernetzter Polyacrylate aufgebracht werden kann.

Die Methacrylatcopolymerisate (B) sind für sich thermoplastisch zu glasklaren, farblosen Massen verarbeitbar. Im wesentlichen beschrieben sind solche Methacrylatcopolymerisate (B) in der EP – A – 0 297 285 (Art.54(3)) mit Comonomeren der Formel I, in der DE – OS 36 32 946 ( = US 4 749 749) mit Comonomeren der Formel II und in der EP – A – 0 283 975 mit Comonomeren der Formel III.

Beispiele solcher Methacrylester – Comonomeren der Formel I, d.h. mit carbocyclischen Gruppen im Esterrest, sind Cyclopentylmethacrylat, Cyclohexylmethacrylat, 3,3,5 – Trimethylcyclohexylmethacrylat, 4 – t – Butylcyclohexylmethacrylat, 3 – Cyclohexylpropylmethacrylat, Phenylmethacrylat, 4 – t – Butylphenylme – thacrylat, 4 – Methoxyphenylmethacrylat, Benzylmethacrylat, 1 – Phenylethylmethacrylat, 2 – Phenylethyl – methacrylat, 3 – Phenylpropylmethacrylat, 2 – Phenoxyethylmethacrylat, 2 – Naphthylmethacrylat.

Acryl – bzw. Methacrylamide, die als Comonomere der Formel II in dem Polymethacrylatharz enthalten sind, sind danach beispielsweise N – Cyclohexylacrylamid, N – Cyclohexylmethacrylamid, N – 2 – Methylcy – clohexylmethacrylamid, N – Phenylmethacrylamid, N – Benzylmethacrylamid.

Beispiele für Maleinimid – Comonomere der Formel III sind N – Cyclohexylmaleinimid, N – 2 – bzw. 4 – Methylcyclohexylmaleinimid, N – 3,3,5 – Trimethylcyclohexylmaleinimid, N – 4 – Ethylcyclohexylmaleinimid, N – 2 – bzw. 4 – tert. – Butylcyclohexylmaleinimid, N – 2 – Phenylcyclohexylmaleinimid.

Die in den genannten Patentschriften beschriebenen Methacrylatcopolymerisate geben mit Bisphenol – A – Polycarbonat die dort beschriebenen voll kompatiblen Polymermischungen, die sich durch hohe Trans – parenz auszeichnen.

## Durchführung der Erfindung

### 1. Der Bisphenol – A – Polycarbonat – (PC) – Kunststoff

Der erfindungsgemäße Kunststoffkörper besteht zum überwiegenden Teil aus dem vor UV – Licht zu schützenden Bisphenol – A – Polycarbonat. Polycarbonate des Bisphenol A sind glasklare, zähe Kunststoffe und z.B. unter der Bezeichnung ®Makrolon im Handel. Die Molekulargewichte $M_w$, in g pro Mol, wie sie beispielsweise mit Hilfe der Gelpermeations – Chromatographie oder mit der Streulichtmethode bestimmbar

sind, der diesen Kunststoffen zugrundeliegenden Carbonatpolymeren liegen im Bereich von 20.000 bis 60.000, insbesondere 20.000 bis 40.000, und die Vicat-Erweichungstemperaturen, VET, dieser Polymeren, gemessen nach DIN 53460, liegen bei 140 Grad C bis 160 Grad C.

Der PC-Kunststoff kann zur Herstellung des erfindungsgemäßen Kunststoffkörpers in vorgefertigter Gestalt, z.B. in Form massiver Platten, in Form von Hohlkammerplatten, in Form von Kuppeln, oder in Form praktisch jeglicher, ausdenkbarer Gestalt, eingesetzt werden, wobei dann die schutzbringende Schicht vorzugsweise durch Lackierung aufgebracht wird. Für die in Coextrusion herzustellenden erfindungsgemäßen Formteile können die Bisphenol-A-Polycarbonate und die zu deren Schutz aufzubringende Methacrylatschicht aus (A) und (B) in der üblichen für Extrusion geeigneten Form und Qualität, z.B. als Granulate oder Pulver vorliegen.

Als PC-Kunststoffe können zur Herstellung der erfindungsgemäßen Kunststoffkörper vorteilhaft auch verträgliche Polymermischungen eingesetzt werden, die zum überwiegenden Teil, d.h. aus 99,9 bis 80 Gew.-%, aus Bisphenol-A-Polycarbonat bestehen, und deren Legierungskomponenten, d.h. in Mengen von 0,1 bis 20 Gew.-%, aus einem oder mehreren Methacrylatcopolymeren (B) bestehen, die - wie schon ausgeführt - voll kompatibel mit dem Bisphenol-A-Polycarbonat sind.

2. Das Methacrylat-Copolymerisat (B),

das einen dauerhaften UV-Schutz des Bisphenol-A-Polycarbonatkunststoffes durch die in der Copolymerisatschicht enthaltenen UV-Absorber gewährleistet, ist in Mengen von 99,9 bis 5 Gew.-% und insbesondere in Mengen von 95 bis 20 Gew.-% und vor allem in Mengen von 90 bis 40 Gew.-%, aus Methylmethacrylat und weiter in Mengen von 0,1 bis 95 Gew.-%, insbesondere in Mengen von 5 bin 80 Gew.-% und vor allem in Mengen von 10 bis 60 Gew.-%, aus Methacrylestern der Formel I mit den Esterresten $R_1$ und/oder N-substituierten (Meth)acrylamiden der Formel II mit den Substituenten $R_2$ und/oder N-substituierten Maleinimiden der Formel III mit den Substituenten $R_3$ als Comonomeren aufgebaut.

Die Reste $R_1$, $R_2$ und $R_3$ enthalten alle carbocyclische Strukturen, d.h. cycloaliphatische und aromatische Gruppen, die entweder direkt über das funktionelle Sauerstoff- bzw. Stickstoffatom, oder über eine Spacergruppe (s. A in Formel I) an die polymerisierbare (Meth)acrylgruppe gebunden sind.

Das Copolymerisat kann in Mengen von 0 bis 40 Gew.-%, insbesondere in Mengen von 2,5 bis 40 Gew.-% und vor allem in Mengen von 5 bis 35 Gew.-%, weitere Einheiten $\alpha,\beta$-ungesättigter Monomerer, wie z.B. Styrol, $\alpha$-Methylstyrol, Methacrylsäure bzw. Acrylsäure oder deren Alkylester mit 1 bis 10 C-Atomen im Esterrest, wobei die Alkylgruppen auch verzweigt sein können, enthalten.

Die Herstellung dieser statistisch aufgebauten Copolymerisate wird nach bekannten Verfahren zur Polymerisation $\alpha,\beta$-ungesättigter Verbindungen, insbesondere der radikalischen Polymerisation, beispielsweise in Substanz oder in Lösung oder als Suspensions- bzw. Emulsionspolymerisation, durchgeführt. Als radikalische Polymerisationsinitiatoren können dazu Azoverbindungen, wie Azodiisobutyronitril, oder Peroxide, wie Dibenzoylperoxid, Dilauroylperoxid, oder Redoxsysteme dienen, oder die Startradikale können strahlenchemisch erzeugt werden. (Vgl. H. Rauch-Puntigam, Th. Völker "Acryl- und Methacrylverbindungen", Springer Verlag 1967.)

Es ist bekannt, daß die Verträglichkeit von Polymeren in Mischungen von ihren Polymerisationsgraden abhängt, und zwar nimmt in der Regel die Verträglichkeit mit steigendem Molekulargewicht der Polymeren ab, wobei die Mischung dann zwei- bzw. mehrphasig wird. Für die Herstellung von erfindungsgemäßen mehrschichtigen Bisphenol-A-Polycarbonat-Polymethacrylat-Kunststoffkörpern werden Methacrylatcopolymere eingesetzt, die Molekulargewichte, $M_w$, in g pro Mol, wie sie beispielsweise mit Hilfe der Gelpermeations-Chromatographie oder mit der Streulichtmethode bestimmbar sind, von 30.000 bis 250.000, vorzugsweise 50.000 bis 150.000 haben und deren reduzierten Viskositäten $\eta$spec/C, gemessen gemäß DIN 51562, in Chloroform als Lösungsmittel, im Bereich von 18 bis 65 ml/g, bevorzugt im Bereich von 30 bis 50 ml/g, liegen. Die Herstellung der so molekulargewichtsgeregelten Copolymerisate wird insbesondere durch Polymerisation in Gegenwart von Übertragungsreglern, wie insbesondere den dazu bekannten Mercaptanen, durchgeführt (s. dazu Houben-Weyl, Methoden der organischen Chemie, Band XIV/1, 1961, Seite 66).

So sind beispielsweise Methylmethacrylat-Copolymerisate mit 5 bis 50 Gew.-% Cyclohexylmethacrylat und einem $\eta$spec/C von 40 bis 45 ml/g über den gesamten Legierungsbereich mit Bisphenol-A-Polycarbonat, z.B. ®Makrolon 1189, das ein $\eta$spec/C von 43 ml/g (gemessen in Chloroform) hat, verträglich. Methacrylatharze aus 100 Gew.-% Phenylmethacrylat bzw. solchen, überwiegend aus Phenylmethacrylat aufgebauten, sind mit Bisphenol-A-Polycarbonat, z.B. ®Makrolon 1189 oder ®Makrolon 3100 ebenfalls über den gesamten Legierungsbereich verträglich.

Weiterhin sind beispielsweise Methylmethacrylat-Copolymerisate mit 6 bis 15 Gew.-% N-Cyclohexylmaleinimid und einem ηspec/C von 33 ml/g in Chloroform als Lösungsmittel, über den gesamten Legierungsbereich mit Bisphenol A-Polycarbonat, z.B. ®Makrolon 1189, das ein ηspec/C von 43 ml/g hat, verträglich.

Die Bisphenol-A-Polycarbonat-verträglichen Methacrylat-Copolymeren (B) lassen sich als solche zu glasklaren farblosen Formkörpern thermoplastisch verarbeiten, welche Vicat-Erweichungstemperaturen, VET, gemessen nach DIN 53460, von etwa 100 bis 130 Grad C im Falle der Copolymerisate mit Comonomeren der Formel I, und von etwa 110 bis 150 Grad C als Copolymerisate mit Comonomeren der Formel II oder III, aufweisen. Als Deckschichten auf Bisphenol-A-Polycarbonatkunststoffkörpern haben die Methacrylat-Copolymerisate (B) eine hervorragende Haftung.

Die erfindungsgemäßen als Schutzschichten für Bisphenol-A-Polycarbonatkunststoffe wegen ihrer guten Haftung ausgezeichneten Methacrylat-Copolymeren (B) bilden entsprechend der Kriterien nach der "Transition Temperature Method" und nach der "Optical Method", wie sie für verträgliche Polymermischungen gefordert und im Kapitel "Compatible Polymers" in Polymer Handbook, Second Edition, Copyright C 1975, by John Wiley & Sons; III, 211, beschrieben sind, mit dem Polycarbonat des Bisphenol A verträgliche Mischungen. Diese verträglichen Mischungen lassen sich weiter durch ihr LCST-Verhalten (D.R. Paul, Polymer Blends and Mixtures, 1985, S. 1 bis 3; Martinus Nijhoff Publishers, Dordrecht, Boston Lancaster; Kirk-Othmer, 3rd, Ed. Vol. 18, pg. 443 - 478, J. Wiley 1982) so charakterisieren, daß sie eine untere Entmischungstemperatur von ≧ 120 Grad C, besonders ≧ 150 Grad C besitzen. Experimentell wird dazu der Trübungspunkt $T_{Tr}$ (Trübungstemperatur) bestimmt, z.B. auf der Kofler-Heizbank (Chem. Ing.-Technik 1950, S. 289), der den von der qualitativen und quantitativen Mischungszusammensetzung abhängigen Phasenübergang, homogen nach heterogen, des Gemisches charakterisiert. Beispielsweise liegen für (PC)-(B)-Mischungen für Gewichtsverhältnisse PC : B = 99,9 bis 95 : 0,1 bis 5 die Trübungspunkte $T_{Tr}$ bei

> 260 Grad C, wenn (B) Comonomere der Formel I und
> 200 Grad C, wenn (B) Comonomere der Formel II oder III enthält.

Die UV-Absorber-haltige Deckschicht aus (A) und (B) wird durch Coextrusion oder Lackierung in Schichtdicken von 1 bis 500 µm, in der Regel von 1 bis 100 µm, vor allem in Schichtdicken bis etwa 50 µm nach ansonsten bekannten Techniken aufgebracht. Bei der Extrusionstechnik verwendet man bekannte Mehrstoff-Schlitzdüsen. Die Extrusion erfolgt bei Temperaturen zwischen 240 und 300 Grad C. Bei der Lackierung muß man mit Lösungsmitteln arbeiten, in denen das System (A) + (B) löslich ist. Beispielsweise läßt sich hierzu 1-Methoxypropanol-2 verwenden.

3. Die UV-Absorber (A)

Die Polymethacrylatschicht enthält in Mengen von 0,01 bis 50 Gew.-% eines UV-Absorbers mit einem Molekulargewicht $M_w$ ≦ 5000. Geeignete UV-Absorber sind 2-Hydroxy-4-n-octoxybenzophenon, 2-Hydroxy-4-methoxybenzophenon, 2-(2'-Hydroxy-5'-methylphenyl)-benztriazol und andere Abkömmlinge des 2-Hydroxy-benzophenons oder Benzotriazols, ferner 2,4-Dihydroxy-benzoylfuran, Salicylsäurephenylester, Resorcindisalicylat, Resorcinmono- und di-benzoat, Benzylbenzoat, Stilben, β-Methylumbelliferon und dessen Benzoat. Zahlreiche weitere UV-Absorber sind bekannt und im Handel erhältlich. Besonders bevorzugt sind UV-Absorber von geringer Flüchtigkeit bei der Verarbeitungstemperatur, d.h. besonders solche mit möglichst hohem Molekulargewicht. Der UV-Absorber soll in der gewählten Konzentration in der Polymethacrylatschicht möglichst homogen mischbar sein. Die PC-haltige Kernschicht kann völlig frei von UV-Absorbern sein oder enthält diese in deutlich geringerer Konzentration als die Deckschicht. Eine Konzentration von 0,5 Gew.-% wird nicht überschritten.

Als homogen mischbare UV-Absorber mit Molekulargewichten von ≦ 5000 und von geringer Flüchtigkeit sind auch solche geeignet, die in ihrem Molekülaufbau mehrere UV-absorbierende Teilstrukturen, auch verschiedener chemischer Konstitution, enthalten. Solche Oligomere lassen sich nach bekannten Polykondensationsreaktionen mehrfunktioneller Ausgangsverbindungen oder durch Polymerisationsreaktionen bekannter polymerisierbarer UV-Absorber (s. beispielsweise US 4 576 870), auch durch Mitpolymerisation weiterer üblicher Comonomerer, erhalten. Durch Einstellung geeigneter Kondensationsbedingungen und Polymerisationsbedingungen (z.B. Startermenge, Übertragungsreglermenge) lassen sich Molekulargewichte ≦ 5000 einstellen.

Polymerisierbare UV-Absorber, wie z.B. 2-(2'-Hydroxyphenyl)-5-methacryloylamido-benzotriazol oder 2-Hydroxy-4-methacryloxybenzophenon, sind aber auch in ihrer monomeren Form als niedermolekulare UV-Absorber-Zusätze (A) in der Polymethacrylatschicht (B) vorteilhaft einsetzbar. (Vgl. auch Houben-Weyl, 4. Auflage Bd. 15, S. 256 - 260, Verlag Chemie).

Vorteile der Erfindung

Die erfindungsgemäßen mehrschichtigen Kunststoffkörper auf Bisphenol-A-Polycarbonatbasis finden vor allem im Freien z.B. als Verglasungs- und Bauelemente ihre Anwendung, wo sie dem Sonnenlicht und den herrschenden Witterungsbedingungen ausgesetzt sind. Versuche zur Bewitterung, wie Versuche im Xenotest (Chem. Rdsch. 27 [1974] Nr. 14, S. 2 bis 7) bzw. im QUV-Test (DIN 53387) und im Hagelschußversuch, zeigen die deutliche Überlegenheit der neuen Materialien gegenüber den Vergleichsmaterialien nach dem bisherigen Stand der Technik. Der Hagelschußversuch dient dazu, Materialien auf ihre Hagelschlagfestigkeit zu überprüfen, da in der Vergangenheit durch Verwendung weniger hagelschlagfester Materialien, z.B. im Gewächshausbau, schwere Schäden durch Hagelschlag entstanden sind. Durch die Erfindung werden durch UV-Strahlung bedingte Schädigungen des Kunststoffes vermieden, wodurch auch weitere zerstörerische Einwirkungen - wie Hagelschlag - keine Schäden mehr verursachen.

Der Hagelschlagversuch ist ein nicht genormter, firmeneigener Test, bei dem z.B. Platten mit Polyamid-Kugeln verschiedener Größe und verschiedener kinetischer Energie beschossen werden. (J. Hennig, J. Lehmann, G. Zaengler, Angew. makromol. Chemie 158/159, 301 - 311, 1988.)
Weitere Meßgrößen zur Oberflächencharakterisierung und damit der Nachweis der erfindungsgemäßen Vorteile sind die Bestimmung der Oberflächenrauhigkeit mit dem Perthometer nach DIN 4768, die Bestimmung des Oberflächenglanzes, als Reflektometerwert nach DIN 67530, der Gelbwert nach DIN 6167 und die Bestimmung der Schichtdicke der UV-Absorber-haltigen Schicht, z.B. nach US 4 477 521.

**Beispiele**

A. Herstellung der Methacrylat-Copolymerisate

**Beispiel 1**

Einem Gemisch aus 95 Gew.-Teilen Methylmethacrylat (MMA) und 5 Gew.-Teilen Phenylmethacrylat (PhMA) werden 0,2 Gew.-Teile Dilauroylperoxid als Initiator und 0,6 Gew.-Teile Dodecylmercaptan als Molekulargewichtsregler unter Rühren hinzugefügt. Diese Lösung wird in einem Folienschlauch 3 h bei 55 Grad C und 16 h bei 50 Grad C polymerisiert und zur Endpolymerisation 3 h bei 110 Grad C im Trockenschrank getempert. Das Polymerisat ist farblos und transparent. Das mittlere Molekulargewicht wurde zu $M_w$ = 78.000 und die Glasübergangstemperatur Tg zu 107 Grad C bestimmt.

**Beispiel 2**

Ein Gemisch aus 90 Gew.-Teilen MMA und 10 Gew.-Teilen PhMA wird mit 0,2 Gew.-Teilen Dilauroylperoxid sowie 0,55 Gew.-Teilen Dodecylmercaptan gemäß Beispiel 1 polymerisiert. Das farblose und transparente Polymerisat weist ein mittleres Molekulargewicht $M_w$ = 70.000 und eine Glastemperatur Tg = 108 Grad C auf.

**Beispiel 3**

In einem Gemisch aus 50 Gew.-Teilen MMA und 50 Gew.-Teilen PhMA wird als Initiator 0,2 Gew.-Teile Dilauroylperoxid und als Molekulargewichtsregler 0,55 Gew.-Teile Dodecylmercaptan gelöst. Die Lösung wird gemäß den vorangegangenen Beispielen im Wasserbad 18 h bei 50 Grad C und 22 h bei 60 Grad C polymerisiert und zur Endpolymerisation 3 h bei 110 Grad C getempert. Das Polymerisat ist farblos, transparent, weist ein mittleres Molekulargewicht von $M_w$ = 82.000 auf und besitzt eine Glasübergangstemperatur Tg = 110 Grad C.

**Beispiel 4**

Einem Gemisch aus 70 Gew.-Teilen MMA, 20 Gew.-Teilen PhMA und 10 Gew.-Teilen $\alpha$-Methylstyrol werden als Initiatoren 0,4 Gew.-Teile tert.-Butylpivalat, 0,1 Gew.-Teile 2,2'-Azobisisobutyronitril, 0,37 Gew.-Teile Dilauroylperoxid, sowie 0,05 Gew.-Teile 2,2'-Bis-(tert.-butylperoxy)butan und als Molekulargewichtsregler 0,55 Gew.-Teile Dodecylmercaptan zugefügt. Die Lösung wird im Wasserbad im Folienschlauch 65 h bei 60 Grad C, sowie 90 h bei 65 Grad C polymerisiert und zur Endpolymerisation 12 h bei 110 Grad C getempert. Das Polymerisat ist farblos und völlig klar. Das mittlere Molekulargewicht wurde zu $M_w$ = 87.000 und die Glasübergangstemperatur zu Tg = 114 Grad C bestimmt.

**Beispiel 5**

Ein Gemisch aus 80 Gew.-Teilen MMA, 10 Gew.-Teilen PhMA und 10 Gew.-Teilen n-Butylmethacrylat wird mit 0,2 Gew.-Teilen Dilauroylperoxid sowie 0,5 Gew.-Teilen Dodecylmercaptan gemäß Beispiel 1 polymerisiert. Das farblose und transparente Polymerisat weist ein mittleres Molekulargewicht $M_w$ = 79.000 und eine Glastemperatur Tg = 102 Grad C auf.

**Beispiel 6**

Einem Gemisch aus 95 Gew.-Teilen MMA und 5 Gew.-Teilen Cyclohexylmethacrylat (CHMA) werden 0,2 Gew.-Teile Dilauroylperoxid und 0,65 Gew.-Teile Dodecylmercaptan unter Rühren hinzugefügt. Diese Lösung wird in einem Folienschlauch im Wasserbad 3 h bei 55 Grad C und 16 h bei 50 Grad C polymerisiert und zur Endpolymerisation 10 h bei 125 Grad C getempert. Das Polymerisat ist farblos, transparent, hat ein mittleres Molekulargewicht $M_w$ = 78.000 und weist eine Glasübergangstemperatur Tg = 106 Grad C auf.

**Beispiel 7**

In einem Gemisch aus 90 Gew.-Teilen MMA und 10 Gew.-Teilen CHMA werden 0,2 Gew.-Teile Dilauroylperoxid sowie 0,6 Gew.-Teile Dodecylmercaptan gelöst. Diese Lösung wird gemäß Beispiel 6 polymerisiert und danach zur Endpolymerisation getempert. Das so gewonnene Polymerisat ist farblos und transparent. Das mittlere Molekulargewicht wurde zu $M_w$ = 81.000 und die Glasübergangstemperatur zu Tg = 107 Grad C bestimmt.

**Beispiel 8**

In 80 Gew.-Teilen MMA und 20 Gew.-Teilen CHMA werden 0,2 Gew.-Teile Dilauroylperoxid und 0,55 Gew.-Teile Dodecylmercaptan gelöst. Das Gemisch wird im Folienschlauch im Wasserbad 12 h bei 50 Grad C polymerisiert und zur Endpolymerisation 10 h bei 110 Grad C getempert. Das mittlere Molekulargewicht des völlig farblosen und transparenten Polymerisats beträgt Mw = 83.000, dessen Glasübergangstemperatur Tg = 110 Grad C.

**Beispiel 9**

In 94 Gew.-Teilen MMA werden 6 Gew.-Teile Cyclohexylmethacrylamid, 0,2 Gew.-Teile Dilauroylperoxid und 0,51 Gew.-Teile Dodecylmercaptan gelöst. Dieses Gemisch wird in einem Folienschlauch 24 h bei 50 Grad C polymerisiert und zur Endpolymerisation 10 h bei 110 Grad C getempert. Das Polymerisat ist gelblich und transparent. Das mittlere Molekulargewicht wurde zu $M_w$ = 100.000 bestimmt.

B. Herstellung der Lackschichten auf Bisphenol-A-Polycarbonat (PC)

**Beispiele 10 bis 15**

Herstellung der Lacke

Die gemäß den Beispielen 1 bis 3 und 6 bis 8 hergestellten Polymerisate werden gemahlen und mit einem niedermolekularen UV-Absorber in einem gemeinsamen Lösungsmittel gelöst.
Die genaue Formulierung lautet:

80 Gew.-Teile 1-Methoxy-propanol-2
14 Gew.-Teile Polymer gemäß Beispielen 1 - 3 u. 6 - 8
6 Gew.-Teile UV-Absorber ®Cyasorb 531 (Cyanamid)

®Cyasorb 531 ist ein Benzophenon-Derivat mit folgender Struktur

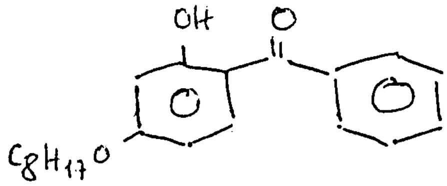

2-Hydroxy-4-n-octoxybenzophenon

Die Lackformulierung wird mit einem 15 µm-Rakel auf eine flache Bisphenol-A-Polycarbonat-Platte aufgetragen, entsprechend einer Trockenfilmdicke von ca. 3 µm.

C. Herstellung der Coextrusionsschichten

**Beispiele 16 bis 18**

Die gemäß den Beispielen 4, 5 und 9 hergestellten Polymeren werden gemahlen, in einem Trommelmischer mit niedermolekularem UV-Absorber compoundiert und in einem 2. Compoundierschritt extrudiert und granuliert.
Die genaue Formulierung lautet.

90 Gew.-Teile Polymer gemäß den Beispielen 4, 5 und 9

10 Gew.-Teile UV-Absorber ®Tinuvin 234 (Ciba-Geigy)

®Tinuvin 234 ist ein Benztriazol-Derivat mit folgender Struktur

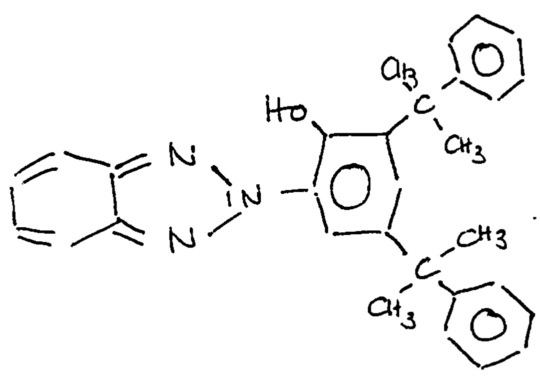

2-(2-Hydroxy-3,5-di-isopropylphenyl)benztriazol

Die oben genannte Formulierung wird in Coextrusion in einem Extrusionswerkzeug mittels einer Mehrkanal-Düse auf Bisphenol-A-Polycarbonat-Stegdoppelplatten aufgebracht. Die Dicke der Coextrusionsschicht beträgt 10 - 30 µm.

D. Bewitterung und Bruchmechanik der nach den Beispielen 10 bis 18 beschichteten PC – Substrate

**Beispiele 19 – 27**

In der folgenden Tabelle sind Bewitterungsdaten (Bewitterung im Xenotest bzw. QUV – Test) und Daten aus dem Hagelschlagversuch (kinetische Energien der Polyamid – Kugeln bei Bruch des PC – Substrats) dem nach dem bekannten Stand der Technik beschichteten PC (Vergleichsbeispiel A) und unbeschichteten PC gegenübergestellt (Vergleichsbeispiele B).
Die angegebenen kinetischen Energien in [J] des Hagelschlagversuchs geben den Wert an, oberhalb dem Schäden an der Oberfläche des beschichteten bzw. unbeschichteten PC, ohne Bewitterung, zu erkennen sind.

Tabelle 1

UV-Schutzschichten für Polycarbonat

| Beispiel | Schicht gemäß Beispiel-Nr. | Xenotest (Bewitterung in [h], + = unveränderte Oberfläche) | QUV-Test (Bewitterung in [h], + = unveränderte Oberfläche) | Hagelschlagversuch (kinet. Energie [J]) im Anlieferungszustand |
|---|---|---|---|---|
| 19 | 10 | 5000 + | 1000 + | $\geq$ 10 |
| 20 | 11 | 5000 + | - | $\geq$ 10 |
| 21 | 12 | 5000 + | 1000 + | $\geq$ 10 |
| 22 | 13 | 5000 + | 1000 + | $\geq$ 10 |
| 23 | 14 | 5000 + | 1000 + | $\geq$ 10 |
| 24 | 15 | 5000 + | 1000 + | $\geq$ 10 |
| 25 | 16 | 5000 + | - | $\geq$ 10 |
| 26 | 17 | 1000 + | - | $\geq$ 15 |
| 27 | 18 | 5000 + | - | $\geq$ 4 |
| Vergleichsbeispiele A | PMMA + 10 % Tinuvin® 234 (Lackschicht) | 4000 + | 1000 + | $\geq$ 3 |
| B | Makrolon unbeschichtet | 500 +<br>1000: leichter Gelbstich<br>2000: deutlicher Gelbstich<br>4000: starker Gelbstich Oberfläche rissig und matt | - | $\geq$ 20 (Anlieferung)<br>Werte nach etwa 4000 h Xeno-Bewitterung auf etwa 1 abfallend |

## Patentansprüche

1. Mehrschichtiger Kunststoffkörper mit einer Kernschicht aus mehr als 50 Gew.-% Bisphenol-A-Polycarbonat und einer darauf angebrachten, UV-Absorber enthaltenden, thermoplastischen Polymethacrylatkunststoffschicht und der noch mit weiteren Schichten belegt sein kann,

dadurch gekennzeichnet,

daß die Polymethacrylatkunststoffschicht aus

(A) 0,01 bis 50 Gew.-% eines UV-Absorbers mit einem Molekulargewicht $M_w \leqq 5000$ und

(B) 99,99 bis 50 Gew.-% eines Methacrylatcopolymerisats, aufgebaut aus

(b1) 99,9 bis 5 Gew.-%, insbesondere 95 bis 20 Gew.-% Methylmethacrylateinheiten und gegebenenfalls weiteren $\alpha,\beta$-ungesättigten Monomereinheiten in Mengen von 0 bis 40 Gew.-% und

(b2.1) aus 0,1 bis 95 Gew.-%, insbesondere 5 bis 80 Gew.-% Methacrylestereinheiten mit carbocyclischen Gruppen im Esterrest der Formel I

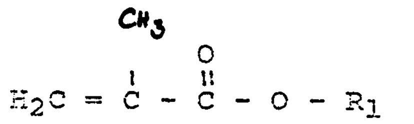

I,

worin

R₁: Y oder A-Y sind, wobei Y ein Cycloalkyl- oder ein einfach oder mehrfach alkylsubstituierter Cycloalkylrest mit 5 bis 12 C-Atomen, oder ein gegebenenfalls alkyl- bzw. oxyalkylsubstituierter Arylrest mit 6 bis 12 C-Atomen, und A eine Alkylengruppe, die auch verzweigt sein kann, min 1 bis 6 C-Atomen oder eine Oxyalkylengruppe mit 2 bis 4 C-Atomen sind und/oder

(b2.2) aus 0,1 bis 95, insbesondere 5 bis 25 Gew.-% monosubstituierten (Meth)-acrylamideinheiten aus Monomeren der allgemeinen Formel II

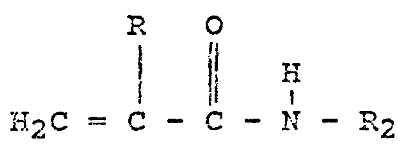

II,

worin

R: H oder $CH_3$ und

$R_2$: ein organischer Rest eines cyclischen gegebenenfalls substituierten Moleküls mit aliphatischer oder aromatischer Struktur mit 5 bis 12 C-Atomen ist,

und/oder

(b2.3) aus 0,1 bis 95, insbesondere 5 bis 40 Gew.-% Maleinimideinheiten der Formel III

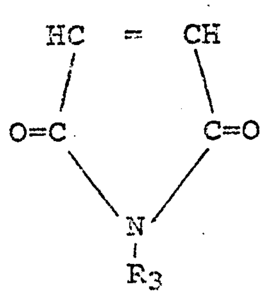

III,

worin

$R_3$: ein gegebenenfalls substituierter Cycloalkylrest, und die Substituenten dann Alkylrest mit 1 bis 6 C-Atomen oder ein Phenylrest sind, ist

besteht, wobei die cyclischen Reste von $R_1$, $R_2$ und $R_3$ kein ausgeprägtes Absorptionsvermögen für sichtbares Licht bis hin zur Ultraviolettstrahlung von 340 nm haben,

das Copolymerisat (B) ein Molekulargewicht $M_w$ zwischen 30.000 und 250000 besitzt, thermoplastisch verarbeitbar ist, und eine Mischung aus Bisphenol-A-Polycarbonat (PC) und Copolymerisat (B) in jedem Verhältnis verträglich ist und eine untere Entmischungstemperatur (LCST) von $\geqq$ 120 Grad C besitzt.

**2.** Mehrschichtiger Kunststoffkörper nach Anspruch 1, dadurch gekennzeichnet, daß die Bisphenol-A-Polycarbonatkunststoffkernschicht eine verträgliche Polymermischung aus 99,9 bis 80 Gew.-% Bisphenol-A-Polycarbonat (PC) und 0,1 bis 20 Gew.-% einem oder mehreren Methacrylatcopolymeren (B) ist.

**3.** Verfahren zur Herstellung mehrschichtiger Kunststoffkörper der Ansprüche 1 und 2, dadurch gekennzeichnet, daß die UV-Absorber-haltige Polymethacrylatkunststoffschicht und gegebenenfalls zusätzliche Deckschichten, durch Coextrusion oder durch Lackierung in Schichtdicken von 1 bis 500 µm, insbesondere in Schichtdicken von 1 bis 50 µm, auf den Bisphenol-A-Polycarbonatkunststoff aufgebracht werden.

## Claims

**1.** A multi-layered plastics body, having a core layer of more than 50 wt.% of bisphenol-A-polycarbonate and a thermoplastic polymethacrylate plastics layer applied thereto and containing ultraviolet absorber, which plastics layer may be covered by still further layers, characterised in that the polymethacrylate plastics layer consists of

(A) 0.01 to 50 wt.% of an ultraviolet absorber, having a molecular weight $M_w \leq 5000$, and

(B) 99.99 to 50 wt.% of a methacrylate copolymer, synthesised from

(b1) 99.9 to 5 wt.%, more particularly 95 to 20 wt.%, of methylmethacrylate units and, optionally, further $\alpha,\beta$-unsaturated monomer units in amounts of 0 to 40 wt.% and

(b2.1) from 0.1 to 95 wt.%, more particularly 5 to 80 wt.%, of methacrylic ester units having carbocyclic groups in the ester radical of Formula I

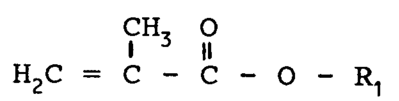
I,

wherein

$R_1$: represents Y or A-Y, whereby Y is a cycloalkyl or a mono- or polyalkyl-substituted cycloalkyl group having 5 to 12 carbon atoms, or, optionally, an alkyl- or an oxyalkyl-substituted aryl group having 6 to 12 carbon atoms, and A is an alkylene group which may also be branched, having 1 to 6 carbon atoms, or, an oxyalkylene group having 2 to 4 carbon atoms, and/or

(b2.2) from 0.1 to 95, more particularly 5 to 25 wt.%, of mono-substituted (meth)acrylamide units consisting of monomers of general Formula II

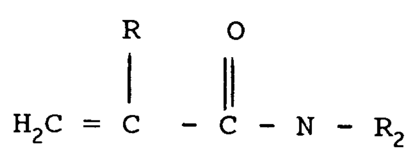
II,

wherein

R : represents H or $CH_3$ and

$R_2$: an organic group of a cyclic, optionally substituted molecule with an aliphatic or aromatic structure, having 5 to 12 carbon atoms, and/or

(b2.3) from 0.1 to 95, more particularly 5 to 40 wt.%, of maleinimide units of Formula III

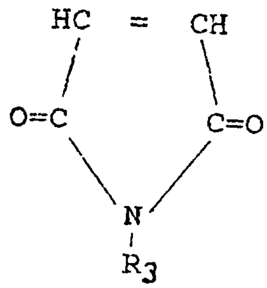

III,

wherein

$R_3$: represents an optionally substituted cycloalkyl group, and the substituents are then alkyl groups having 1 to 6 carbon atoms or a phenyl group,

whereby the cyclic groups of $R_1$, $R_2$ and $R_3$ have no distinct absorption ability for visible light up to ultraviolet radiation of 340 nm, the copolymer (B) has a molecular weight $M_w$ between 30,000 and 250,000 and may be processed thermoplastically, and a mixture consisting of bisphenol-A-polycarbonate (PC) and copolymer (B) is compatible in each ratio and has a lower demixing temperature (LCST) ≧ 120 °C.

**2.** A multi-layered plastics body according to claim 1, characterised in that the bisphenol-A-polycarbonate plastics core layer is a compatible polymer mixture consisting of 99.9 to 80 wt.% of bisphenol-A-polycarbonate (PC) and 0.1 to 20 wt.% of 1 or more methacrylate copolymers (B).

**3.** A process for preparing multi-layered plastics bodies of claims 1 and 2, characterised in that the ultraviolet-absorber-containing polymethylacrylate plastics layer and, optionally, additional top layers are applied, by coextrusion or varnishing, onto the bisphenol-A-polycarbonate plastics, in thicknesses of 1 to 500 µm, more particularly in thicknesses of 1 to 50 µm.

**Revendications**

**1.** Corps de matière Plastique multicouches, comportant une couche d'âme faite, pour plus de 50% en poids, de polycarbonate de bisphénol A et, appliquée sur celle-ci, une couche de matière thermoplastique de polyméthacrylate qui contient un absorbant d'UV et qui peut être encore recouverte d'autres couches, caractérisés en ce que la couche de matière plastique de polyméthacrylate se compose de

(A) 0,01 à 50% en poids d'un absorbant d'UV ayant un poids moléculaire $M_w$ ≦ 5000 et de

(B) 99,99 à 50% en poids d'un copolymère de méthacrylate, composé de

(b1) 99,9 à 5% en poids, en particulier 95 à 20% en poids de motifs méthacrylate de méthyle et éventuellement d'autres motifs monomères α,β-insaturés dans des proportions de 0 à 40% en poids, et de

(b2.1) 0,1 à 95% en poids, en particulier 5 à 80% en poids de motifs ester méthacrylique contenant des groupements carbocycliques dans le reste ester de formule I

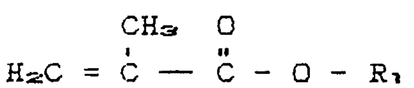

I,

dans laquelle

$R_1$ est mis pour Y ou A-Y, Y étant un reste cycloalkyle, un reste cycloalkyle à 5-12 atomes de carbone substitué une ou plusieurs fois par des groupements alkyle ou un reste aryle à 6-12 atomes de carbone éventuellement substitué par des groupements alkyle ou oxyalkyle, et A étant un groupement alkylène à 1-6 atomes de carbone, qui peut être aussi ramifié, ou un groupement oxyalkylène à 2-4 atomes de carbone, et/ou

de

(b2.2) 0,1 à 95, en particulier 5 à 25% en poids de motifs (méth)acrylate monosubstitué, formés de monomères de formule générale II

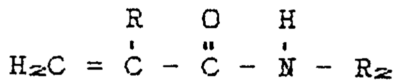 II

dans laquelle

R est mis pour H ou $CH_3$ et

$R_2$ est un reste organique d'une molécule cyclique éventuellement substituée de structure aliphatique ou aromatique à 5 − 12 atomes de carbone, et/ou de

(b2.3) 0,1 à 95, en particulier 5 à 40% en poids de motifs maléimide de formule III

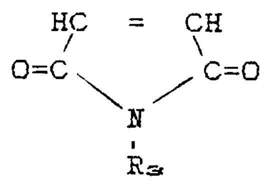 III

dans laquelle

$R_3$ est mis pour un reste cycloalkyle éventuellement substitué et les substituants sont alors des restes alkyle à 1 − 6 atomes de carbone ou pour un reste phényle,

les restes cycliques de $R_1$, $R_2$ et $R_3$ n'ayant pas de pouvoir absorbant marqué pour la lumière visible jusqu'au rayonnement ultraviolet de 340 nm, le copolymère (B) ayant un poids moléculaire $M_w$ entre 30 000 et 350 000, étant transformable à l'état thermoplastique, et un mélange de polycarbonate de bisphénol A (PC) et de copolymère (B) étant compatible dans tout rapport et ayant une température inférieure de démixtion (LCST) $\geq$ 120 ° C.

**2.** Corps de matière plastique multicouches selon la revendication 1, caractérisés en ce que la couche de matière plastique de polycarbonate de bisphénol A est un mélange compatible de polymères, composé de 99,9 à 80% en poids de polycarbonate de bisphénol A (PC) et de 0,1 à 20% en poids d'un ou de plusieurs copolymères de méthacrylate (B).

**3.** Procédé de fabrication de corps de matière plastique multicouches selon la revendication 1 ou 2, caractérisé en ce que la couche de matière plastique de polyméthacrylate contenant un absorbant d'UV et éventuellement des couches de recouvrement supplémentaires sont appliquées sur la matière plastique de polycarbonate de bisphénol A par co − extrusion ou par enduction, en épaisseur de couche de 1 à 500 $\mu$m, en particulier en épaisseur de couche de 1 à 50 $\mu$m.